# EUROPEAN PATENT SPECIFICATION

(11) **EP 4 060 205 B1**
(45) Date of publication and mention of the grant of the patent: **09.07.2025**
(21) Application number: 20888639.0
(22) Date of filing: 13.11.2020
(51) Int. Cl.: F16H 7/12, F16H 7/02

(54) **DUAL-ARM TENSIONER**
ZWEIARMIGE SPANNVORRICHTUNG
TENDEUR À DEUX BRAS

(30) Priority: 14.11.2019 CN 201911152723; 14.11.2019 CN 201922030682 U
(43) Date of publication of application: 21.09.2022
(73) Proprietor: Gates Corporation, Denver, CO 80202 (US)
(72) Inventor: FU, Hongliang, Shanghai 200131 (CN)
(74) Representative: Carpmaels & Ransford LLP
(86) International application number: PCT/CN2020/128552
(87) International publication number: WO 2021/093836

(56) References cited:
- WO-A1-2013/142951
- WO-A1-2016/061674
- WO-A1-2016/126428
- CN-A- 104 220 780
- CN-A- 107 208 755
- CN-A- 107 208 756
- CN-A- 109 312 830
- CN-A- 110 230 675
- CN-A- 110 848 349
- CN-U- 211 501 516
- JP-A- 2004 068 973
- JP-A- 2017 067 152
- US-A1- 2006 287 146
- US-A1- 2018 010 670

## Description

### TECHNICAL FIELD

The present invention relates to a two-arm tensioner, which is particularly suitable for an internal combustion engine transmission system with a motor generator unit.

### BACKGROUND

An engine with a starter-generator unit has been developed to improve the fuel consumption and emissions. When the starter-generator unit in this type of engine is launched, it acts as a starter motor to restart the engine. Once the engine launches, the starter-generator unit can be used as a generator to recharge the battery.

The starter-generator unit is mechanically connected to a crankshaft of the engine through a circular transmission apparatus, such as a belt or chain. The circular transmission apparatus vibrates under the influence of the system, especially when the starter-generator unit switches functions between the starter and the generator. In such an event, the roles of the tensioned and relaxed sides of the circular transmission apparatus are exchanged with each other. For this reason, the industry has developed a tensioner to handle the vibration of the circular transmission apparatus with the starter-generator unit.

For specific tensioners, refer to the tensioner structures disclosed by CN104220780B, CN106931111A, CN107208756A, DE102016218709A1, DE102009003366Al, US2018010670, and the like WO 2016/126428 discloses a dual arm tensioner comprising a first pivot arm having a first pulley journalled thereto and engageable with a mounting surface through a first pivot axis, a second pivot arm having a second pulley journalled thereto, the second pivot arm pivotally engaged to the first pivot arm through a second pivot axis, the second pivot axis disposed from the first pivot axis, a biasing member engaged between the first and second pivot arms urging the first pulley toward the second pulley, and the second pivot axis is between the first pulley and the first pivot axis.

### SUMMARY

The present invention solves the technical issues by providing a new type of two-arm tensioner.

In particular, the present invention provides: a two-arm tensioner as recited in claim 1. Optional features are recited in the dependent claims.

The beneficial effects of the present invention are as follows: The new type of two-arm tensioner has a simple structure and is easy to assemble.

### DESCRIPTION OF ACCOMPANYING DRAWINGS

Figure 1 is a schematic diagram of a two-arm tensioner installed on the end face of an internal combustion engine in the present invention.
Figure 2 is a three-dimensional view of a two-arm tensioner in the present invention.
Figure 3 is a partial cross-sectional view of a two-arm tensioner in the present invention.
Figure 4 is another two-arm tensioner not according to the present invention.

### DETAILED DESCRIPTION

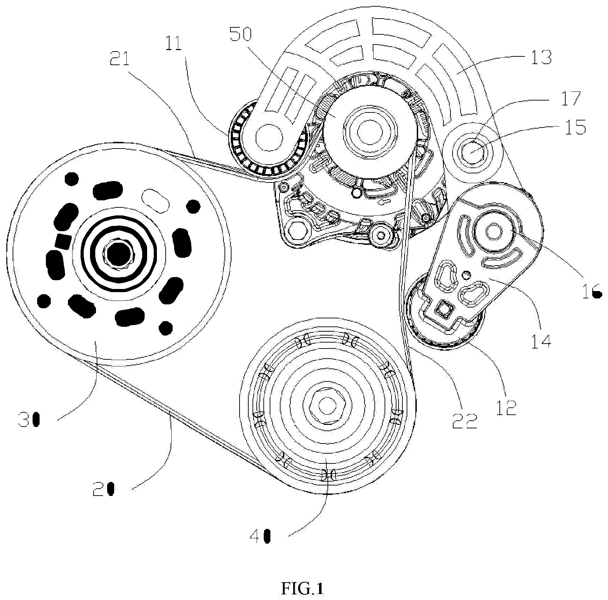

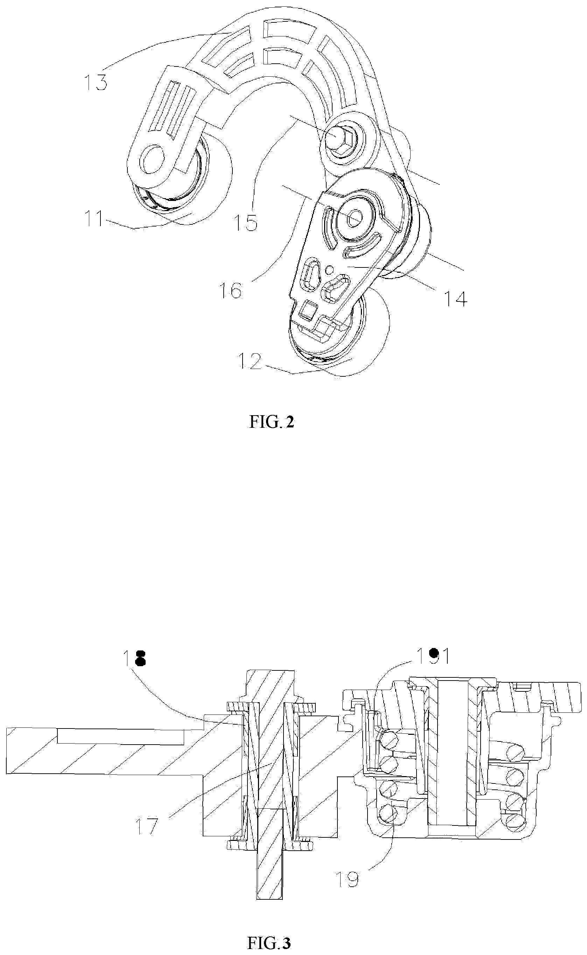

A clear and complete description of a two-arm tensioner of the present invention is provided below in combination with figures 1-3.

An end surface pulley system of an internal combustion engine includes a crankshaft pulley 30, an accessory pulley 40, a motor generator unit (MGU) pulley 50, a first and second tensioning pulleys 11 and 12, and a circular transmission part 20. Usually, the circular transmission part 20 is a belt or chain, wrapping around the crankshaft pulley 30, the accessory pulley 40, and the motor generator unit pulley 50. The circular transmission part 20 is tensioned by a tensioning pulley.

Refer to Figure 1. The first tensioning pulley 11 and the second tensioning pulley 12 are respectively installed on both sides of the motor generator unit pulley 50. The first and second tensioning pulleys 11 and 12 are respectively pressed on the back of the circular transmission part 20. The first tensioning pulley 11 is pressed on a first transmission part 21 extending between the crankshaft pulley 30 and the motor generator unit pulley 50; and the second tensioning pulley 12 is pressed on a second transmission part 22 extending between the crankshaft pulley 30 and the motor generator unit pulley 50. Usually, one or more accessory pulleys may be provided as required between the crankshaft pulley and the motor generator unit pulley. When the accessory pulleys are provided, the first and second transmission parts 21 and 22 may be cross portions between the motor generator unit pulley and the accessory pulleys, respectively. The first transmission part 21 is on the left side of the motor generator unit pulley, and the second transmission part 22 is on the right side of the motor generator unit pulley.

Referring to Figures 1-3, in the present invention, the two-arm tensioner includes a first tension arm 13 and a second tension arm 14 that are hinged together. The first tension arm 13 is roughly in an arc shape, and partially wraps around the motor generator unit pulley 50 in the internal combustion engine. A first pivoting center 15 is provided on the first tension arm, and the first tension arm 13 can be pivoted around the first pivoting center 15. The arc-shaped first tension arm 13 allows the tensioner to not interfere with the motor generator unit pulley 50 when the tensioner pivots the circular transmission part 20 around the first pivoting center 15. A first end of the first tension arm 13 is provided with the rotatable first tensioning pulley 11, and a second end thereof is a pivotally hinged to the second tension arm 14. Preferably, the first pivoting center 15 is provided between the first end and the second end of the first tension arm 13 along the first tension arm 13. The two-arm tensioner further includes the pivotal second tension arm 14 hinged at the second end of the first tension arm 13. One end of the second tension arm 14 is hinged to the first tension arm 13, and the other end thereof is provided with the second tensioning pulley 12.

The first pivoting center 15 is provided outside the wrapping range of the circular transmission part 20. In a preferred embodiment, the first tension arm 13 is one piece. In other embodiments, the first tension arm 13 includes a first portion and a second portion that are mutually hinged. Before the two-arm tensioner is assembled to the internal combustion engine, the first portion may be rotated relative to the second portion; and after the two-arm tensioner is assembled to the internal combustion engine, the first portion is fixed relative to the second portion. The first portion and the second portion are hinged at the first pivoting center, or a hinge point deviates from the first pivoting center.

In a preferred embodiment, the first tension arm 13 is provided with a hole, and the first tension arm 13 is secured on the internal combustion engine pivotally by using a locking element 17. The locking element 17 may be in various forms. For example, it may be provided as a bolt, or it may be provided as a snap fastener. An antifriction member 18, such as a lining or bearing with a low friction coefficient, is provided between the locking element 17 and the hole of the first tension arm 13, so that the first tension arm 13 of the two-arm tensioner can pivot freely on the internal combustion engine. In addition, the antifriction member 18 can provide a certain degree of damping to relieve the relative movement of the first tension arm 13 and the locking element 17. In other embodiments, the two-arm tensioner may further include a bracket (not illustrated), and, after assembly, the bracket is fixed to the internal combustion engine. The first tension arm 13 is fixed to the bracket by the locking element, and can be pivoted around the first pivoting center.

A disc spring (not illustrated) may also be provided on the first pivoting center 15. The disc spring is axially provided between the locking element 17 and the first tension arm, providing an axial pressure on the pivoting center and increasing the damping of the first pivoting center 17.

The second tension arm 14 is hinged to the first tension arm 13. The second tension arm 14 can be pivoted around the second pivoting center 16. A deflector 19 is provided between the first and the second tension arms 13 and 14 to deflect the two around the second pivoting center 16 in the direction close to each other. The deflector 19 is preferably a torsion spring 19, a helical spring, or another part commonly used in the art. One end of the deflector 19 directly abuts against one of the first and second tension arms 13 and 14, and the other end thereof directly or indirectly abuts against the other one of the first and second tension arms 13 and 14. A damping piece 191 may also be provided between the deflector 19 and the tension arm, so that the tension arm better biases the circular transmission part 20, and the vibration of the circular transmission part 20 is relieved. Typically, the damping piece 191 may abut against the end portion of the torsion spring 19 to be connected in series; or the damping piece may be connected in parallel with the torsion spring. Certainly, other forms can also be used.

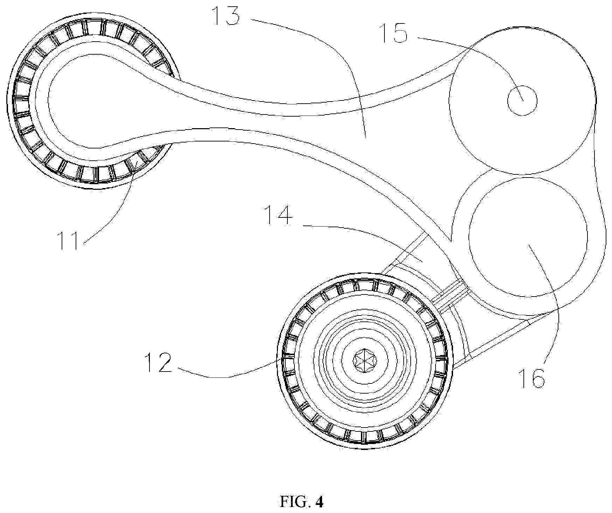

Referring to Figure 4, the first tension arm 13 partially covers the wrapping range of the circular transmission part 20 and can be provided as a plate-like structure. The first pivoting center 15 is provided outside the wrapping range of the circular transmission part 20. The first tensioning pulley 11 is installed on one side near the internal combustion engine relative to the first tension arm 13. The second tension arm 14 is installed on one side near the internal combustion engine relative to the first tension arm 13. The second tensioning pulley 12 is installed on one side away from the internal combustion engine relative to the second tension arm 14. The first and second tensioning pulleys 11 and 12 are on the same radial surface to drive the circular transmission part 20.

In the aforementioned embodiments, with reference to Figure 1, the first tension arm is provided on the left side of the motor generator unit and the second tension arm is provided on the right side thereof. In other embodiments, the first tension arm may be provided on the right side of the motor generator unit, and the second tension arm is provided on the left side thereof, i.e. the left and right positions of the first and second tension arms are exchanged with each other.

## Claims

1. A two-arm tensioner, used on an internal combustion engine mounted with a motor generator unit, wherein the internal combustion engine comprises a crankshaft pulley (30) and a motor generator unit pulley (50), and a circular transmission part (20) wraps around the crankshaft pulley (30) and the motor generator unit pulley (50);
the two-arm tensioner comprises a first tension arm (13) and a second tension arm (14), the first tension arm (13) having a first end and a second end, and the second tension (14) arm having a first end and a second end, wherein the first tension arm (13) is provided with a first pivoting center (15) and can pivot around the first pivoting center (15), wherein the first end of the first tension arm (13) is provided with a first tensioning pulley (11), and the first end of the second tension arm (14) is pivotally hinged to the first tension arm (13) about a second pivoting center (16) at the second end of the first tension arm (13), wherein the first and second pivoting centers (15, 16) are offset from each other, and the second end of the second tension arm (14) is provided with a second tensioning pulley (12), wherein the first pivoting center (15) is provided between the first end and the second end of the first tension arm (13) along the first tension arm (13);
a torsion spring (19) is placed between the first and the second tension arms (13, 14) and deflects both of them around the second pivoting center (16) of the second tension arm (14) in the direction close to each other; and **characterized in that**:
the first pivoting center (15) is provided outside the wrapping range of the circular transmission part (20), wherein: the first tension arm (13) is roughly in an arc shape, and partially wraps around the motor generator unit pulley (50) in the internal combustion engine.

2. The two-arm tensioner according to claim 1, wherein: the first and second tensioning pulleys (11, 12) are separately pressed on the back of the circular transmission part (20).

3. The two-arm tensioner according to claim 1, wherein: the first tensioning pulley (11) and the second tensioning pulley (12) are respectively installed on both sides of the motor generator unit pulley (50).

4. The two-arm tensioner according to claim 3, wherein: the first tensioning pulley (11) is pressed against a first part (21) of the circular transmission part (20) located on the left side of the motor generator unit (50) and extending between a crankshaft pulley (30) and the motor generator unit pulley (50); and the second tensioning pulley (12) is pressed against a second part (22) of the circular transmission part (20) that extends between the motor generator unit pulley (50) and the crankshaft pulley (30).

5. The two-arm tensioner according to claim 1, wherein: the first tension arm (13) comprises a first portion and a second portion that are mutually hinged; before the two-arm tensioner is assembled to the internal combustion engine, the first portion may be rotated relative to the second portion; and after the two-arm tensioner is assembled to the internal combustion engine, the first portion is fixed relative to the second portion.

6. The two-arm tensioner according to claim 5, wherein the first portion and the second portion are hinged at the first pivoting center (15), or a hinge point deviates from the first pivoting center (15).

7. The two-arm tensioner according to claim 1, wherein: the first pivoting center (15) comprises a hole provided in the first tension arm (13), and a locking element (17) is provided to pivotally secure the first tension arm (13) in the internal combustion engine.

8. The two-arm tensioner according to claim 7, wherein a disc spring is provided at the first pivoting center (15), and the disc spring is provided axially between the locking element (17) and the first tension arm (13).

9. The two-arm tensioner according to claim 1, wherein: the two-arm tensioner further comprises a bracket, the first tension arm (13) is pivotally mounted on the bracket through the first pivoting center (15), and the bracket is fixed to the internal combustion engine.

10. The two-arm tensioner according to claim 1, wherein: one end of the torsion spring (19) directly abuts against one of the first and second tension arms (13, 14), and the other end thereof directly or indirectly abuts against the other one of the first and second tension arms (13, 14).

11. The two-arm tensioner according to claim 10, wherein a damping piece (191) is also provided between the torsion spring (19) and one of the first and second tension arms (13, 14); wherein the damping piece (191) may abut against the end portion of the torsion spring (19) to be connected in series, or the damping piece (191) may be connected in parallel with the torsion spring (19).

12. The two-arm tensioner according to claim 1, wherein the first tensioning pulley (11) is pressed against a first part (21) of the circular transmission part (20) that extends between a crankshaft pulley (30) and the motor generator unit pulley (50); and the second tensioning pulley (12) is pressed against a second part (22) of the circular transmission part (20) that extends between the motor generator unit pulley (50) and the crankshaft pulley (30).

13. The two-arm tensioner according to claim 1 or 12, wherein: the first tension arm (13) is one piece.

14. The two-arm tensioner according to claim 1 or 12, wherein: the first tensioning pulley (11) is installed on one side near the internal combustion engine relative to the first tension arm (13); the second tension arm (14) is installed on one side near the internal combustion engine relative to the first tension arm (13); the second tensioning pulley (12) is installed on one side away from the internal combustion engine relative to the second tension arm (14); the first and second tensioning pulleys (11, 12) are on the same radial surface.

## Patentansprüche

1. Zweiarmige Spannvorrichtung, die an einer Brennkraftmaschine verwendet wird, die mit einer Motor/Generator-Einheit montiert ist, wobei die Brennkraftmaschine eine Kurbelwellenriemenscheibe (30) und eine Motor/Generator-Einheitriemenscheibe (50) umfasst und ein kreisförmiges Getriebeteil (20) die Kurbelwellenriemenscheibe (30) und die Motor/Generator-Einheitriemenscheibe (50) umschlingt,
die zweiarmige Spannvorrichtung umfasst einen ersten Spannarm (13) und einen zweiten Spannarm (14), wobei der erste Spannarm (13) ein erstes Ende und ein zweites Ende hat und der zweite Spannarm (14) ein erstes Ende und ein zweites Ende hat, wobei der erste Spannarm (13) mit einem ersten Schwenkzentrum (15) versehen ist und um das erste Schwenkzentrum (15) schwenken kann, wobei das erste Ende des ersten Spannarms (13) mit einer ersten Spannriemenscheibe (11) versehen ist und das erste Ende des zweiten Spannarms (14) um ein zweites Schwenkzentrum (16) an dem zweiten Ende des ersten Spannarms (13) schwenkend an dem ersten Spannarm (13) angelenkt ist, wobei das erste und das zweite Schwenkzentrum (15, 16) voneinander versetzt sind und das zweite Ende des zweiten Spannarms (14) mit einer zweiten Spannriemenscheibe (12) versehen ist, wobei das erste Schwenkzentrum (15) zwischen dem ersten Ende und dem zweiten Ende des ersten Spannarms (13) entlang des ersten Spannarms (13) vorgesehen ist,
eine Torsionsfeder (19) ist zwischen dem ersten und dem zweiten Spannarm (13, 14) platziert und lenkt beide um das zweite Schwenkzentrum (16) des zweiten Spannarms (14) in eine Richtung ab, so dass sie nahe beieinander liegen, und **dadurch gekennzeichnet, dass**:
das erste Schwenkzentrum (15) außerhalb des Umschlingungsbereichs des kreisförmigen Getriebeteils (20) vorgesehen ist, wobei: der erste Spannarm (13) ungefähr bogenförmig ist und die Motor/Generator-Einheitriemenscheibe (50) in der Brennkraftmaschine umschlingt.

2. Zweiarmige Spannvorrichtung nach Anspruch 1, wobei: die erste und die zweite Spannriemenscheibe (11, 12) separat auf die Rückseite des kreisförmigen Getriebeteils (20) gedrückt sind.

3. Zweiarmige Spannvorrichtung nach Anspruch 1, wobei: die erste Spannriemenscheibe (11) und die zweite Spannriemenscheibe (12) jeweils an beiden Seiten der Motor/Generator-Einheitriemenscheibe (50) installiert sind.

4. Zweiarmige Spannvorrichtung nach Anspruch 3, wobei: die erste Spannriemenscheibe (11) gegen einen ersten Teil (21) des kreisförmigen Getriebeteils (20) gedrückt wird, der an der linken Seite der Motor/Generator-Einheit (50) angeordnet ist und sich zwischen einer Kurbelwellenriemenscheibe (30) und der Motor/Generator-Einheitriemenscheibe (50) erstreckt, und die zweite Spannriemenscheibe (12) gegen einen zweiten Teil (22) des kreisförmigen Getriebeteils (20) gedrückt wird, der sich zwischen der Motor/Generator-Einheitriemenscheibe (50) und der Kurbelwellenriemenscheibe (30) erstreckt.

5. Zweiarmige Spannvorrichtung nach Anspruch 1, wobei: der erste Spannarm (13) einen ersten Abschnitt und einen zweiten Abschnitt umfasst, die aneinander angelenkt sind; bevor die zweiarmige Spannvorrichtung mit der Brennkraftmaschine zusammengebaut wird, kann der erste Abschnitt bezüglich des zweiten Abschnitts gedreht werden, und nachdem die zweiarmige Spannvorrichtung mit der Brennkraftmaschine zusammengebaut worden ist, liegt der erste Abschnitt bezüglich des zweiten Abschnitts fest.

6. Zweiarmige Spannvorrichtung nach Anspruch 5, wobei der erste Abschnitt und der zweite Abschnitt an dem ersten Schwenkzentrum (15) angelenkt sind oder ein Anlenkpunkt von dem ersten Schwenkzentrum (15) abweicht.

7. Zweiarmige Spannvorrichtung nach Anspruch 1, wobei: das erste Schwenkzentrum (15) ein in dem ersten Spannarm (13) vorgesehenes Loch umfasst und ein Verriegelungselement (17) vorgesehen ist, um den ersten Spannarm (13) schwenkend in der Brennkraftmaschine zu befestigen.

8. Zweiarmige Spannvorrichtung nach Anspruch 7, wobei eine Tellerfeder an dem ersten Schwenkzentrum (15) vorgesehen ist und die Tellerfeder axial zwischen dem Verriegelungselement (17) und dem ersten Spannarm (13) vorgesehen ist.

9. Zweiarmige Spannvorrichtung nach Anspruch 1, wobei: die zweiarmige Spannvorrichtung ferner eine Halterung umfasst, der erste Spannarm (13) durch das erste Schwenkzentrum (15) schwenkend an der Halterung montiert ist und die Halterung an der Brennkraftmaschine festgelegt ist.

10. Zweiarmige Spannvorrichtung nach Anspruch 1, wobei: ein Ende der Torsionsfeder (19) direkt an dem ersten oder dem zweiten Spannarm (13, 14) anliegt und ihr anderes Ende direkt oder indirekt an dem jeweils anderen des ersten und des zweiten Spannarms (13, 14) anliegt.

11. Zweiarmige Spannvorrichtung nach Anspruch 10, wobei auch ein Dämpfungsteil (191) zwischen der Torsionsfeder (19) und dem ersten oder dem zweiten Spannarm (13, 14) vorgesehen ist, wobei das Dämpfungsteil (191) zur Reihenschaltung an dem Endabschnitt der Torsionsfeder (19) anliegen kann oder das Dämpfungsteil (191) parallel mit der Torsionsfeder (19) verbunden werden kann.

12. Zweiarmige Spannvorrichtung nach Anspruch 1, wobei die erste Spannriemenscheibe (11) gegen einen ersten Teil (21) des kreisförmigen Getriebeteils (20) gedrückt wird, der sich zwischen einer Kurbelwellenriemenscheibe (30) und der Motor/Generator-Einheitriemenscheibe (50) erstreckt, und die zweite Spannriemenscheibe (12) gegen einen zweiten Teil (22) des kreisförmigen Getriebeteils (20) gedrückt wird, der sich zwischen der Motor/Generator-Einheitriemenscheibe (50) und der Kurbelwellenriemenscheibe (30) erstreckt.

13. Zweiarmige Spannvorrichtung nach Anspruch 1 oder 12, wobei: der erste Spannarm (13) einteilig ist.

14. Zweiarmige Spannvorrichtung nach Anspruch 1 oder 12, wobei: die erste Spannriemenscheibe (11) an einer bezüglich des ersten Spannarms (13) in der Nähe der Brennkraftmaschine liegenden Seite installiert ist, der zweite Spannarm (14) an einer bezüglich des ersten Spannarms (13) in der Nähe der Brennkraftmaschine liegenden Seite installiert ist, die zweite Spannriemenscheibe (12) an einer bezüglich des zweiten Spannarms (14) von der Brennkraftmaschine weg liegenden Seite installiert ist, die erste und die zweite Spannriemenscheibe (11, 12) auf derselben radialen Fläche liegen.

## Revendications

1. Tendeur à deux bras, utilisé sur un moteur à combustion interne monté avec une unité de moteur-générateur, le moteur à combustion interne comprenant une poulie de vilebrequin (30) et une poulie d'unité de moteur-générateur (50), et une pièce de transmission circulaire (20) entourant la poulie de vilebrequin (30) et la poulie d'unité de moteur-générateur (50) ;
le tendeur à deux bras comprenant un premier bras de tension (13) et un second bras de tension (14), le premier bras de tension (13) ayant une première extrémité et une seconde extrémité, et le second bras de tension (14) ayant une première extrémité et une seconde extrémité, le premier bras de tension (13) étant pourvu d'un premier centre de pivotement (15) et pouvant pivoter autour du premier centre de pivotement (15), la première extrémité du premier bras de tension (13) étant pourvue d'une première poulie de tension (11), et la première extrémité du second bras de tension (14) étant articulée sur le premier bras de tension (13) autour d'un second centre de pivotement (16) au niveau de la seconde extrémité du premier bras de tension (13), les premier et second centres de pivotement (15, 16) étant décalés l'un par rapport à l'autre, et la seconde extrémité du second bras de tension (14) étant pourvue d'une seconde poulie de tension (12), le premier centre de pivotement (15) étant situé entre la première extrémité et la seconde extrémité du premier bras de tension (13), le long du premier bras de tension (13) ;
un ressort de torsion (19) étant placé entre les premier et second bras de tension (13, 14) et les déviant tous deux autour du second centre de pivotement (16) du second bras de tension (14) dans la direction proche l'un de l'autre ; et **caractérisé en ce que** :
le premier centre de pivotement (15) est situé en dehors de la plage d'enroulement de la pièce de transmission circulaire (20), le premier bras de tension (13) étant grossièrement en forme d'arc, et s'enroulant partiellement autour de la poulie d'unité de moteur-générateur (50) dans le moteur à combustion interne.

2. Tendeur à deux bras selon la revendication 1, les première et seconde poulies de tension (11, 12) étant pressées séparément sur l'arrière de la pièce de transmission circulaire (20).

3. Tendeur à deux bras selon la revendication 1, la première poulie de tension (11) et la seconde poulie de tension (12) étant respectivement installées de part et d'autre de la poulie d'unité de moteur-générateur (50).

4. Tendeur à deux bras selon la revendication 3, la première poulie de tension (11) étant pressée contre une première partie (21) de la pièce de transmission circulaire (20) située sur le côté gauche de l'unité de moteur-générateur (50) et s'étendant entre une poulie de vilebrequin (30) et la poulie d'unité de moteur-générateur (50) ; et la seconde poulie de tension (12) étant pressée contre une seconde partie (22) de la pièce de transmission circulaire (20) qui s'étend entre la poulie d'unité de moteur-générateur (50) et la poulie de vilebrequin (30).

5. Tendeur à deux bras selon la revendication 1, le premier bras de tension (13) comprenant une première partie et une seconde partie qui sont mutuellement articulées ; avant que le tendeur à deux bras ne soit assemblé au moteur à combustion interne, la première partie pouvant être tournée par rapport à la seconde partie ; et après que le tendeur à deux bras est assemblé au moteur à combustion interne, la première partie étant fixée par rapport à la seconde partie.

6. Tendeur à deux bras selon la revendication 5, la première partie et la seconde partie étant articulées au niveau du premier centre de pivotement (15), ou un point d'articulation s'écartant du premier centre de pivotement (15).

7. Tendeur à deux bras selon la revendication 1, le premier centre de pivotement (15) comprenant un trou situé dans le premier bras de tension (13), et un élément de verrouillage (17) étant fourni pour fixer de manière pivotante le premier bras de tension (13) dans le moteur à combustion interne.

8. Tendeur à deux bras selon la revendication 7, un ressort à disque étant situé au niveau du premier centre de pivotement (15), et le ressort à disque étant disposé axialement entre l'élément de verrouillage (17) et le premier bras de tension (13).

9. Tendeur à deux bras selon la revendication 1, le tendeur à deux bras comprenant en outre un support, le premier bras de tension (13) étant monté pivotant sur le support par l'intermédiaire du premier centre de pivotement (15), et le support étant fixé au moteur à combustion interne.

10. Tendeur à deux bras selon la revendication 1, une extrémité du ressort de torsion (19) venant directement en butée contre l'un des premier et second bras de tension (13, 14), et l'autre extrémité de celui-ci venant directement ou indirectement en butée contre l'autre des premier et second bras de tension (13, 14).

11. Tendeur à deux bras selon la revendication 10, une pièce d'amortissement (191) étant également située entre le ressort de torsion (19) et l'un des premier et second bras de tension (13, 14) ; la pièce d'amortissement (191) pouvant venir en butée contre la partie d'extrémité du ressort de torsion (19) pour être reliée en série, ou la pièce d'amortissement (191) pouvant être reliée en parallèle avec le ressort de torsion (19).

12. Tendeur à deux bras selon la revendication 1, la première poulie de tension (11) étant pressée contre une première partie (21) de la pièce de transmission circulaire (20) qui s'étend entre une poulie de vilebrequin (30) et la poulie d'unité de moteur-générateur (50) ; et la seconde poulie de tension (12) étant pressée contre une seconde partie (22) de la pièce de transmission circulaire (20) qui s'étend entre la poulie d'unité de moteur-générateur (50) et la poulie de vilebrequin (30).

13. Tendeur à deux bras selon la revendication 1 ou 12, le premier bras de tension (13) étant monobloc.

14. Tendeur à deux bras selon la revendication 1 ou 12, la première poulie de tension (11) étant installée sur un côté près du moteur à combustion interne par rapport au premier bras de tension (13) ; le second bras de tension (14) étant installé sur un côté près du moteur à combustion interne par rapport au premier bras de tension (13) ; la seconde poulie de tension (12) étant installée sur un côté à l'opposé du moteur à combustion interne par rapport au second bras de tension (14) ; les première et seconde poulies de tension (11, 12) étant sur la même surface radiale.
